# EUROPÄISCHE PATENTSCHRIFT

(11) **EP 1 147 030 B1**
(45) Veröffentlichungstag und Bekanntmachung des Hinweises auf die Patenterteilung: **15.08.2007**
(21) Anmeldenummer: 00908970.7
(22) Anmeldetag: 27.01.2000
(51) Int. Cl.: B60N 2/427, B60N 2/48, B60R 21/00

(54) **ELEKTRISCH AUSLÖSENDER FEDERSPEICHER**
ELECTRICALLY RELEASABLE SPRING ENERGY ACCUMULATOR
ACCUMULATEUR A RESSORT A DECLENCHEMENT ELECTRIQUE

(30) Priorität: 27.01.1999 DE 29901916 U
(43) Veröffentlichungstag der Anmeldung: 24.10.2001
(73) Patentinhaber: Innotec Forschungs- und Entwicklungs-GmbH, 95604 Marktredwitz (DE)
(72) Erfinder: KÜSPERT, Max, D-95615 Marktredwitz (DE); BRÖDLER, Hilmar, D-95709 Tröstau (DE)
(74) Vertreter: Voigt, Günter
(86) Internationale Anmeldenummer: PCT/DE2000/000287
(87) Internationale Veröffentlichungsnummer: WO 2000/044583

(56) Entgegenhaltungen:
- WO-A-90/05652
- DE-A- 1 937 223
- DE-A- 3 234 422
- DE-A- 4 307 963
- US-A- 5 377 554

## Beschreibung

Die Erfindung bezieht sich auf einen elektrisch auslösenden Federspeicher, wobei paarweise angeordnete Wälzelemente mit einem zwischen ihnen liegenden Auslöseelement als Gesamteinheit in eine Rastnut eines durch eine Druckfeder beaufschlagten Bolzens eingreifen, wobei das Auslöseelement über einen Anker einer elektrischen Spule derart axial bewegbar ist, dass die Wälzelemente leichtgängig und schlupffrei aus der Rastnut herausbewegbar sind, gemäss Oberbegriff des Anspruchs 1.

Ein solcher Federspeicher ist grundsätzlich bereits aus der WO-A-90/05652 bekannt.

Bei dieser bekannten Einrichtung bewegen sich die der Arretierung dienenden Wälzelemente senkrecht zur Hauptrichtung des Betätigungsbolzens, d.h. radial. Daraus resultierend sind beim Auftreten hoher Kräfte Blockierungen nicht auszuschließen.

Die in Kraftfahrzeugen, insbeondere in Personenkraftwagen häufig verwendeten Kopfstützen haben den erheblichen Nachteil, dass bei einem Aufprall eines anderen Fahrzeugs auf die Heckpartie des mit Kopfstützen ausgestatteten Fahrzeugs der Kopf des dortigen Insassen mit großer Heftigkeit auf die normalerweise in einigem Abstand vom Hinterkopf befindliche Kopfstütze aufschlägt. Dies führt in vielen Fällen zu einem gefährlichen Schleudertrauma mit erheblichen Spätfolgen.

Hier wäre bei einem etwaigen Auffahrunfall ein schnelles Heranführen der zurückliegenen Kopfstütze an den Kopf des Insassen und damit eine volle Abstützung des Kopfes im Moment des Auffahrunfalles von großem Vorteil.

Es gibt aber auch zahlreiche andere Situationen, in denen eine schnell auslösende Kraft und eine darauf basierende schnelle Bewegung benötigt wird.

Erreicht wurde dies bisher mit mit pyrotechnischen Systemen, bei denen zwar eine schnelle Reaktionszeit gewährleistet ist, die aber den Nachteil haben, dass sie grundsätzlich nur einmal aktiviert werden können. Es erfordert dann einen recht großen Aufwand, die nach einem Anwendungsfall wieder funktionsfähig zu machen.

Der Erfindung liegt die Aufgabe zu Grunde, einen Federspeicher gemäss Oberbegriff des Anspruchs 1 zu schaffen, der auch bei hohen Kräften sicher arbeitet und der unter Beibehaltung der schnellen Reaktionszeit im Einsatzfall im Anschluss an einen solchen Einsatzfall mit relativ geringem Aufwand erneut funktionsfähig gemacht werden kann.

Die Lösung dieser Aufgabe erfolgt mit Hilfe der Merkmale des Anspruchs 1.

Vorteilhafte Ausgestaltungen ergeben sich aus den Unteransprüchen.

Die Erfindung wird nachfolgend unter Bezugnahme auf die Zeichnungsfiguren beispielhaft erläutert Es zeigen:
- Fig. 1: den grundsätzlichen Aufbau eines solchen elektrisch auslösenden Federspeichers mit einer Druckfeder,
- Fig. 2: eine Variante mit zwei parallelen Druckfedern, die über eine einzige Auslöseinrichtung gesteuert werden in einer ersten Seitenansicht im Schnitt,
- Fig. 3: die Variante gemäß Fig. 2 in einer anderen Seitenansicht,
- Fig. 4: die Variante gemäß Fig. 2 und 3 im Querschnitt entlang der Linie III-III in Fig. 2,
- Fig. 5: eine Detail-Darstellung der Rastnut mit Zylinderrollen und Auslösezunge sowie
- Fig. 5a: eine perspektivische Darstellung der Auslöse-Einrichtung mit Spule, Auslösezunge, Zylinderrollen und Aufnahmeschacht.

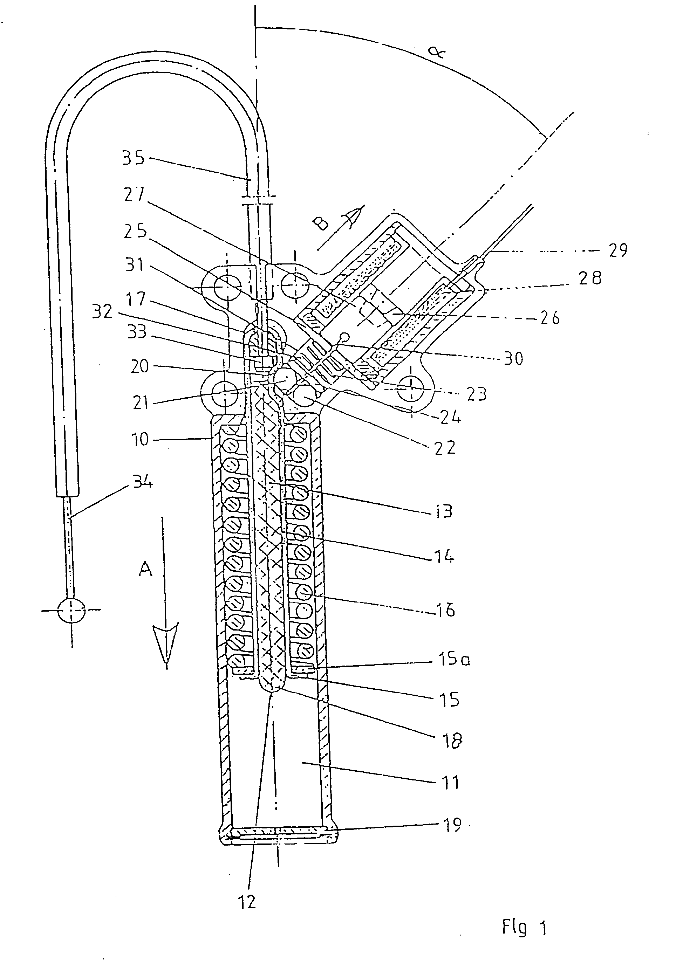

Fig. 1 zeigt einen elektrisch auslösenden Federspeicher 10, der als zylindrischer Hohlkörper 11 ausgebildet ist und in seinem Inneren einen Bolzen 12 aufweist, der vorzugsweise aus einem Kern 13 aus Hartgummi mit einem an zwei Seiten vorhandenen, den Kern 13 abdeckenden flachen Stahlblech 14 besteht, das in seinem unteren Bereich rechteckig abgewinkelte Stützflächen 15 für einen Druckteller 15a einer Druckfeder 16 aufweist. Im oberen Bereich stehen die beiden seitlichen Flächen des Stahlblechs 14 über einen Bogen 17 miteinander in Verbindung, so daß der Hartgummi-Kern 13 dort vom stahlblech 14 voll abgedeckt wird. Im unteren bereich ragt der Kern 13 um ein hinreichendes Maß aus dem Stahlblech heraus. Der dort herausragende Teil 18 des Kerns 13 dient im Falle einer Auslösung des Federspeichers 10 als Dämpfungeglied, wenn der Bolzen 12 auf den unteren Boden 19 des Federspeichers 10 aufschlägt.

Das Stahlblech 14 weist in seinem oberen Bereich seitlich eine Rastnut 20 auf, in die eine der Zylinderrollen 21 und 22 unter der Kraft einer Andruckfeder 23 gedrückt wird. Durch die in die Rastnut 20 eingreifende Zylinderrolle 21 wird verhindert, daß sich der Bolzen 12 unter der Einwirkung der Druckfeder 16 in Richtung des pfeils A nach unten bewegt.

Die Andruckfeder 23 stützt sich einerseits auf einer Auflagerplatte 24 und zum anderen an der Abdeckplatte 25 eines Elektromagneten 26 ab. Der Elektromagnet weist einen in ihm angeordneten und in Achsrichtung beweglichen Anker 27 auf. Der Elektromagnet 26 weist ferner eine elektrische Spule 28 mit einem nach außen gehenden elektrischen Anschluß 29 auf.

Mit Hilfe der Spule 28 wird in Falle einer Auslösung des Federspeichers durch einen Stromimpuls der Anker 27 nach oben in Richtung des Pfeils B bewegt. Dadurch wird gleichzeitig auch die zwischen den beiden Zylinderrollen 21, 22 angeordnete flache Auslösezunge 30 nach oben gezogen und eine Abrollbewegung der Zylinderrollen 21, 22 auf der Auslösezunge 30 einerseits und an Begrenzungeflächen 31 des Schachtes 32 veranlaßt. Die Zylinderrolle 21 wird dadurch aus der Rastnut 20 herausgeführt oder genauer gesagt herausgerollt und der Bolzen 12 damit derart freigegeben, daß dieser unter der Einwirkung der Druckfeder 16 nach unten in Richtung des Pfeils A bewegt wird. Ein im Inneren des Bolzens 12 angeordneter und an der Innenseite der Rastnut 20 des Stahlblechs 14 anliegender Seilnippel 33 und die mit ihm verbundene Seele 34 des Bowdenzugs 35 folgen dieser Bewegung.

So kann die Bewegung des Bolzens 12 auch auf entfernt lieggende Bauteile übertragen werden.

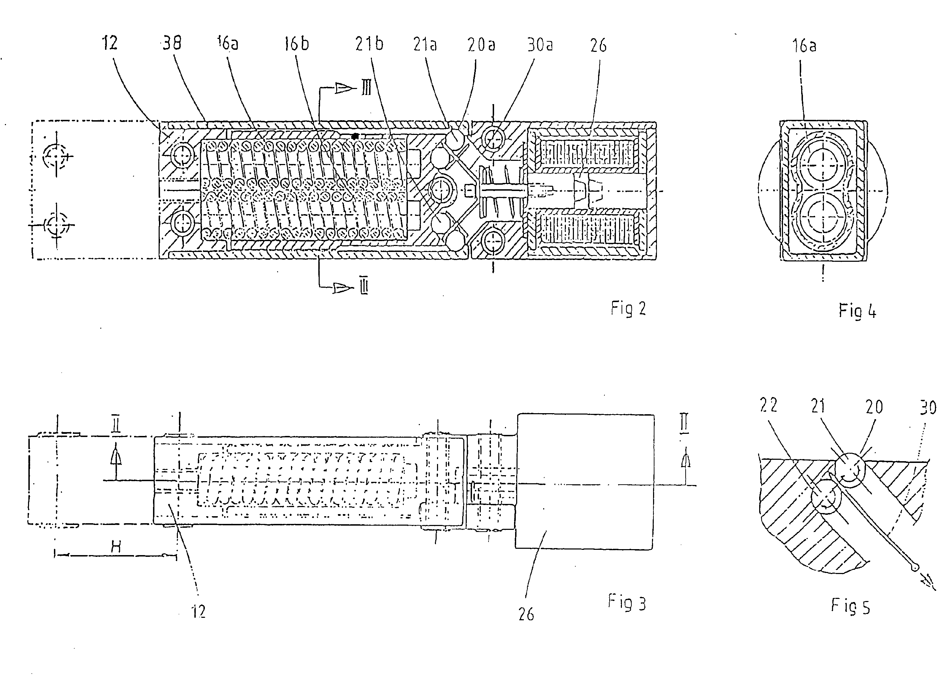

selbstverständlich kann bei einer entsprechenden Gestaltung der Unterseite 19 des Bolzens 12 dieser auch direkt und ohne zwischenschaltung des Bowdenzugs 35 seine Bewegung auf ein anderes Bauelement übertragen, wie dies beispielsweise in Fig. 3 dargestellt ist.

während der Hohlkörper 11 eine zylindrische Gestalt hat, ist der Schacht 32 in wesentlichen quaderförmig und somit von rechteckigem bzw. quadratischem Querschnitt, damit die Zylinderrollen 21, 22 an seiner inneren Begrenzungsfläche 31 abrollen können, werden anstelle der Zylinderrollen 21, 22 Kugeln verwendet, so ist die Gestalt des Schachtes 32 diesen anderen wälzkörpern selbstverständlich anzupassen.

Der Winkel α, unter dem die Achse der aus Anker 27 und Auslösezunge 30 gebildeten Auslöseeinrichtung gegenüber der der Hauptachse des Hohlkörpers 11 und der Druckfeder 16 geneigt, ist liegt bei etwa 45° . Bei Anwendung einer zweiten Auslöseeinrichtung (eines zweiten Aktivators) zur Erzielung einer weiter gesteigerten Funktionssicherheit kann diese zweite Auslöseeinrichtung (Aktivator) einen Winkel von -45° gegenüber der Hauptachse des Hohlkörpers 11 und der Druckfeder 16 und damit einen Versatz von 90° gegenüber der ersten Auslöseeinrichtung aufweisen. Damit wird sichergestellt, dass stoßbedingte mechanische Störimpulse nicht zu Fehlauslösungen führen können. Eine Stoßkomponente, die in Richtung der einen Auslöseeinrichtung (des einen Aktivators) voll wirksam ist, bleibt dann in Richtung der anderen Auslöseeinrichtung (des anderen Aktivators) ohne Wirkung, denn eine mechanische Stoßkomponente, die nur in Richtung der Achse des ersten Aktivators wirkt, kann nicht ungewollt den um 90° versetzten zweiten Aktivators mitauslösen. Die Aktivierung nur einer Auslöseeinrichtung (eines Aktivators) führt aber noch nicht zur Freigabe des Bolzens 12 und zu dessen Auslenkung durch die Druckfeder 16. Dazu ist die gleichzeitige Betätigung beider Auslöseeinrichtungen (Aktivatoren) erforderlich.

Das zentrale Mittelteil des Bolzens 12 kann statt mit einem Kern 13 aus Hartgummi grundsätzlich auch massiv ausgebildet sein. Aus fertigungstechnischen Gründen, aus Kostengründen und um die Massen möglichst gering zu halten, ist es aber von Vorteil, ein aus Gummi, insbesondere aus Hartgummi, bestehendes Innenteil vorzusehen, das von einem Stahlblech 14 bzw. Metallband entsprechender Qualität abgedeckt wird. Gegebenenfalls kann auch ein gehärtetes Stahlband 14 zum Binsatz kommen.

Bei Verwendung eines Kerns 13 aus Hartgummi ist es sinnvoll, an der Innenseite der Rastnut 20 einen Seilnippel vorzusehen, der seinerseits mit der Seele 34 des Bowdenzugs 35 direkt verbunden ist. Dadurch wird die Kraftübertragung zwischen der Rastnut 20 und dem Bowdenzug 35 direkter ausgebildet.

Bei der Auswahl der Spule 28 des Aktivators sollte darauf geachtet werden, daß bereits ein äußerst kurzer Stromimpuls zur Auslösung ausreicht. So wird eine schnelle Reaktion gewährleistet.

Der Boden 19 des Hohlkörpers 11 dient als Anschlag und Wegbegrenzer.

Fig. 2 zeigt eine Variante des Federspeicher 10 gemäß Fig 1, bei der zwei Druckfedern 16a und 16b nebeneinander angeordnet sind. Dadurch läßt sich bei gleicher Federkraft eine in einer Richtung zwar etwas breitere, zugleich aber in der anderen Richtung flachere Ausführung erreichen. Im übrigen sind die Elemente weitgehend übereinstimmend.

Anstelle der einen Auslösezunge 30 sind bei dieser Ausführungsform jedoch zwei Auslösezungen 30 a und 30 b vorhanden, die über ein beiden gemeinsames Ankerelement 37 bewegbar sind. Wird ein Stromimpuls auf die Spule 28a gegeben, so werden das Element des Ankers 37 und damit auch die Auslösezungen 30a, 30b nach oben bewegt. Die Zylinderrollen 21, 22 werden damit zwangsläufig nach rechts (schräg nach oben bzw. schräg nach unten) bewegt und damit aus den Rastnuten 20a und 20b herausgeführt. Der Hohlkörper 38, der die DoppelAnordnung der Druckfedern 16a und 16b umschließt, wird unter deren Federkraft spontan nach unten bewegt. Dies gilt auch für den fest damit verbundenen unteren Teil 19a des Federspeichers 10.

Fig. 3 zeigt eine Darstellung des Federspeichers 10 gemäß Fig. 2 in Seitenansicht und läßt die flache Bauweise klar erkennen.

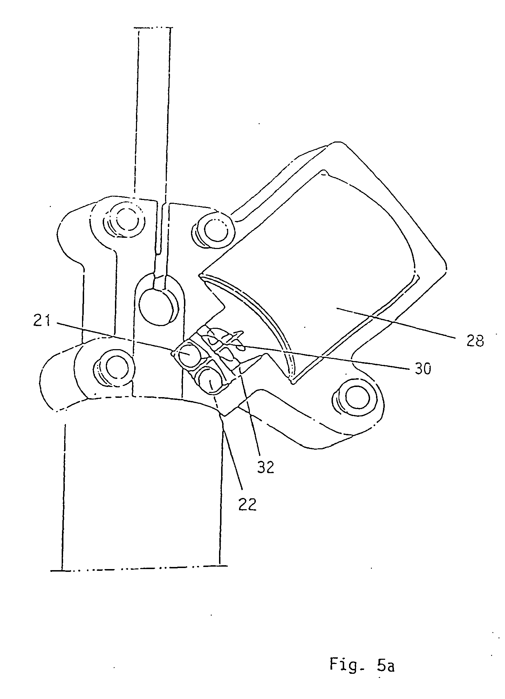

Fig. 4 schließlich zeigt eine Schnittdarstellung der Fig. 2 entlang der dortigen Linie III-III.

Nach einer Auslösung des Federspeichers 10 wird dieser durch Rückführung in die Ausgangslage erneut gespannt und ist dann sofort wieder voll einsatzbereit.

Der Achswinkel alpha ermöglich eine den jeweiligen Bedürfnissen entsprechende vorteilhafte Bingriffsgeometrie an der Rastnut 20, 20a, 20b im Eingriffsbereich der Zylinderrollen 21, 22, 21a, 22a, 21a, 21b. Es werden reine Wälzbewegungen der Zylinderrollen auf der Auslösezunge 30 und an den Innenwandungen des Schachts 32 ohne Schlupf erreicht.

Der klein dimensionierbare Auslösemechanismus ist äußerst massearm und ermöglicht Auslösezeiten von weniger als 1 ms. Das System erfordert nur geringe Auslösekrafte.

Der Achswinkel ermöglicht ferner einen Ausweichvorgang der Zylinderrollen 21, 22 beim Spannen des Systems derart, dass diese Zylinderrollen oberhalb des Bolzen 12 nach dem Auslösevorgang wieder in die vorgeschobene Stellung gehen. Sie lassen sich problemlos zurücksetzen, wenn der Bolzen 12 mit seinem Kopf auf die Zylinderrollen 21, 22 trifft. Nach Erreichen der Endlage des Bolzens 12 haben die Zylinderrollen 21, 22 wieder eine entlastete Position und ihre Bereitschaftsstellung erreicht.

## Patentansprüche

1. Elektrisch auslösender Federspeicher, wobei paarweise angeordnete Wälzelemente (21, 22) mit einem zwischen ihnen liegenden Auslöseelement als Gesamteinheit in eine Rastnut (20) eines durch mindestens eine Druckfeder beaufschlagten Bolzens (12) eingreifen, wobei das Auslöseelement (30) über einen Anker (35, 37) einer elektrischen Spule (28) derart axial bewegbar ist, dass die Wälzelemente (21, 22) leichtgängig und schlupffrei aus der Rastnut (20) herausbewegbar sind, **dadurch, gekennzeichnet, dass** die Achse der elektrischen Spule (28), einer als Auslöseelement dienenden Auslösezunge (30) und einer zugehörigen, Wälzelemente (21, 22) in der Rastnut (20) haltenden Andruckfeder (23) unter einem Winkel von 45° zur Hauptachse des Bolzens (12) und der Druckfeder (16) verläuft.

2. Elektrisch auslösender Federspeicher gemäß Anspruch 1, **dadurch gekennzeichnet, daß** zwei Druckfedern (16a, 16b) in Parallelanordnung vorhanden sind.

3. Elektrisch auslösender Federspeicher nach Anspruch 1 oder 2, **dadurch gekennzeichnet, daß** die Wälzelemente Zylinderrollen sind.

4. Elektrisch auslösender Federspeicher nach Anspruch 1 oder 2, **dadurch gekennzeichnet, daß** die Wälzelemente Kugeln sind.

5. Elektrisch auslösender Federspeicher nach einem der Anspruche 1 bis 4, **dadurch gekennzeichnet, daß** zwei aus elektrischer Spule (28), Auslösezunge (30) und Andruckfeder bestehende Aktivatoren vorhanden sind, die einmal um 45° im Uhrzeigersinn und einmal um 45° im Gegenuhrzeigersinn zur Hauptachse des Bolzens (12) und der Druckfeder (16) versetzt, somit zueinander um 90° versetzt angeordnet sind.

6. Elektrisch auslösender Federspeicher nach einem der Ansprüche 1 bis 5, **dadurch gekennzeichnet, daß** der Bolzen (12) direkt auf ein zu betätigendes Element einwirkt.

7. Elektrisch auslösender Federspeicher nach einem der Ansprüche 1 bis 5, **dadurch gekennzeichnet, daß** der Bolzen (12) mit einem Bowdenzug (35) verbunden ist, der die Bewegung des Bolzens (12) auf ein zu betätigendes Element weiterleitet.

## Claims

1. Electrically triggering spring store, wherein rollable elements (21, 22) arranged in pairs with a trigger element disposed therebetween engage as an entire unit in a detent groove (20) of a pin (12) loaded by at least one compression spring, wherein the trigger element (30) is axially movable by way of an armature (35, 37) of an electric coil (28) in such a manner that the rollable elements (21, 22) are movable out of the detent groove (20) with easy motion and free of slip, **characterised in that** the axis of the electric coil (28), of a trigger tongue (30) serving as trigger element and of an associated pressing spring (23) keeping the rollable elements (21, 22) in the detent groove (20) extend at an angle of 45° to the main axis of the pin (12) and the compression spring (16).

2. Electrically triggering spring store according to claim 1, **characterised in that** two compression springs (16a, 16b) are present in parallel arrangement.

3. Electrically triggering spring store according to claim 1 or 2, **characterised in that** the rollable elements are cylinder rollers.

4. Electrically triggering spring store according to claim 1 or 2, **characterised in that** the rollable elements are balls.

5. Electrically triggering spring store according to one of claims 1 to 4, **characterised in that** two activators consisting of electric coil (28), trigger tongue (30) and pressing spring are present, which are arranged to be offset in one instance by 45° in clockwise sense and in one instance by 45° in counter-clockwise sense with respect to the main axis of the pin (12), thus by 90° relative to one another.

6. Electrically triggering spring store according to one of claims 1 to 5, **characterised in that** the pin (12) acts directly on an element to be actuated.

7. Electrically triggering spring store according to one of claims 1 to 5, **characterised in that** the pin (12) is connected with a Bowden pull (35) passing on the movement of the pin (12) to an element to be actuated.

## Revendications

1. Accumulateur à ressort à déclenchement électrique où des éléments de roulement (21), (22) disposés comme paires forment avec un élément déclencheur agencé entre eux une entité constructive qui s'engage dans une rainure d'arrêt (20) prévue dans un boulon (12) qui subit l'action d'au moins un ressort de pression, ledit élément déclencher (30) étant déplaçable axialement par l'armature (35), (37) d'une bobine électrique (28) de sorte que les éléments de roulement (21), (22) puissent se dégager librement et sans patiner de la rainure d'arrêt (20), **caractérisé en ce que** l' axe de la bobine électrique (28), d'une languette de déclenchement (30) servant d'élément déclencheur et d'un ressort de pression (23) y associé maintenant les éléments de roulement (21), (22) dans la rainure d'arrêt (20), présente un angle de 45° sur l'axe principal du boulon (12) et du ressort de pression (16).

2. Accumulateur, à ressort à déclenchement électrique selon la revendication 1 **caractérisé en ce que** il est prévu deux ressorts de pression (16), (16a) disposés parallèlement.

3. Accumulateur à ressort à déclenchement électrique selon l'une des revendications 1 ou 2 **caractérisé en ce que** les éléments de roulement sont des rouleaux cylindriques.

4. Accumulateur à ressort à déclenchement électrique selon l'une des revendications 1 ou 2 **caractérisé en ce que** les éléments de roulement sont des billes.

5. Accumulateur à ressort à déclenchement électrique selon l'une des revendications à 1 à 4 **caractérisé en ce que** il est prévu deux activateurs constitués chacun d'une bobine électriques (28), d'une languette de déclenchement (30) et d'un ressort de pression, dont l'un est orienté par rapport à l'axe principal du boulon (12) et du ressort de pression (16) avec un angle de 45° dans le sens des aiguilles d'une montre et dont l'autre est orienté par rapport audit axe principal du boulon (12) et du ressort de pression (16) avec un angle de 45° dans le sens inverse des aiguilles d'une montre de façon à ce que les deux activateurs sont disposés en déterminant un angle de 90° entre eux.

6. Accumulateur à ressort à déclenchement électrique selon l'une des revendications 1 à 5 **caractérisé en ce que** le boulon (12) agit directement sur un élément à actionner.

7. Accumulateur à ressort à déclenchement électrique selon l'une des revendications 1 à 5 **caractérisé en ce que** le boulon (12) est relié à un câble Bowden (35) qui transmet le mouvement du boulon (12) à un élément à actionner.
